# EUROPEAN PATENT APPLICATION

(11) **EP 1 484 922 A1**
(43) Date of publication of application: **08.12.2004**
(21) Application number: 03702664.8
(22) Date of filing: 04.02.2003
(51) Int. Cl.: H04N 7/16, H04N 7/167

(54) **CONDITIONAL ACCESS SYSTEM FOR DIGITAL TELEVISION CONTENT BASED ON PREPAYMENT METHODS AND OPTIMISATION OF THE BANDWIDTH OF THE CHANNEL BROADCASTING SAID CONTENT**

(30) Priority: 06.02.2002 ES 200200287
(71) Applicant: Semiconductores Investigacion Y Diseno S.A. -(SIDSA), Tres Cantos, 28760 Madrid (ES)
(72) Inventor: ISENSER FARRE, Jose Maria, Calle Isaac Newton, E-28760 Madrid (ES); SANTOS PEREZ, Carlos, Calle Isaac Newton, E-28760 Madrid (ES); AVELLANO FERNANDEZ, Jose Luis, Calle Isaac Newton, E-28760 Madrid (ES); MOR N CARRERA, Javier, Calle Isaac Newton, E-28760 Madrid (ES)
(74) Representative: Kritzenberger & Zeuner
(86) International application number: PCT/ES2003/000067
(87) International publication number: WO 2003/067885

(57) **Abstract**

The invention relates to a novel method of introducing a pay digital television mechanism whereby the content broadcaster or operator does not require a subscriber management infrastructure. According to the invention, the user is not committed to the operator but instead freely acquires content access time credit by means of an electronic transaction via a point of sale on the Internet or a mobile phone message server. Another innovation of this invention is that it avoids the need to constantly send validation and authentication information specific to each user via the broadcast channel since said information is managed by means of a secure transfer mechanism when the credit is being purchased, with the time and content privileges acquired on the user platform being stored. The saving made in relation to the bandwidth is considerable when the number of users increases.

## Description

### Purpose of the Invention

The invention consists of a novel method whereby it is possible to establish a pay digital television mechanism in which the content broadcaster or operator does not require a subscriber management infrastructure. According to the invention, the user is not committed to the operator but instead freely acquires content access time credit by means of an electronic transaction via a point of sale on the Internet or a mobile phone message server.

Another innovation of this invention is that it is not necessary to constantly send validation and authentication information customized for each user via the broadcast channel since said information is managed by means of a secure transfer mechanism when the credit is purchased, with the time and content privileges acquired on the user platform being stored. The savings made in relation to the bandwidth is considerable when the number of users increases.

### Background of the Invention

Currently, a large majority of Conditional Access Systems (CAS) for digital TV content are based on a private subscribed user management system in which the user platform is customized and the purchase of content is authorized and validated by messages known as Entitlement Management Messages (EMM) sent by the broadcast channel itself. These messages are sent on a continuous basis and are customized for each subscriber, entailing a fairly complex mechanism for managing users and permits. Other messages that are also sent are those known as Entitlement Control Messages (ECM), which carry encrypted Control Word (CW) codes whereby content is decrypted. These codes may or may not be decrypted by the user platform, depending on the privileges derived from the EMMs.

### Description of the Invention

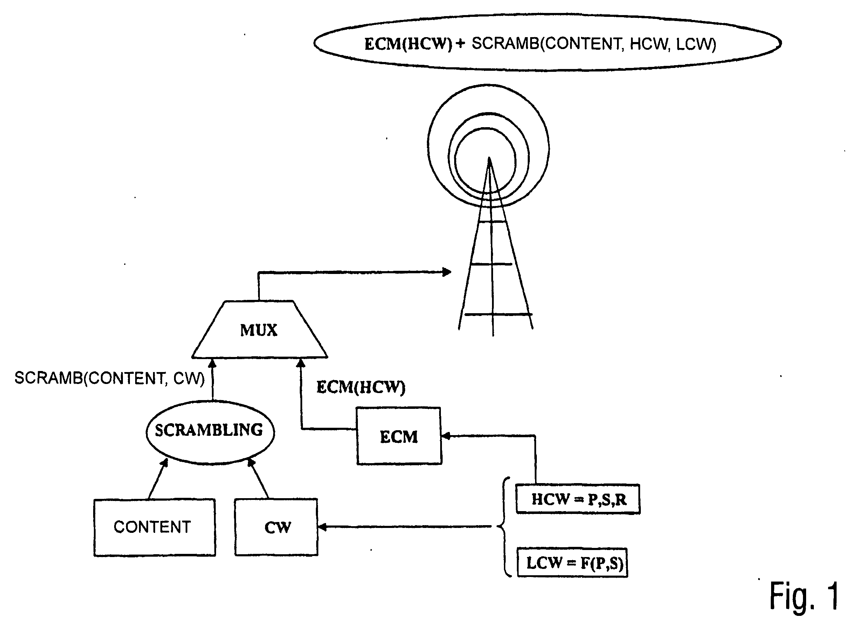

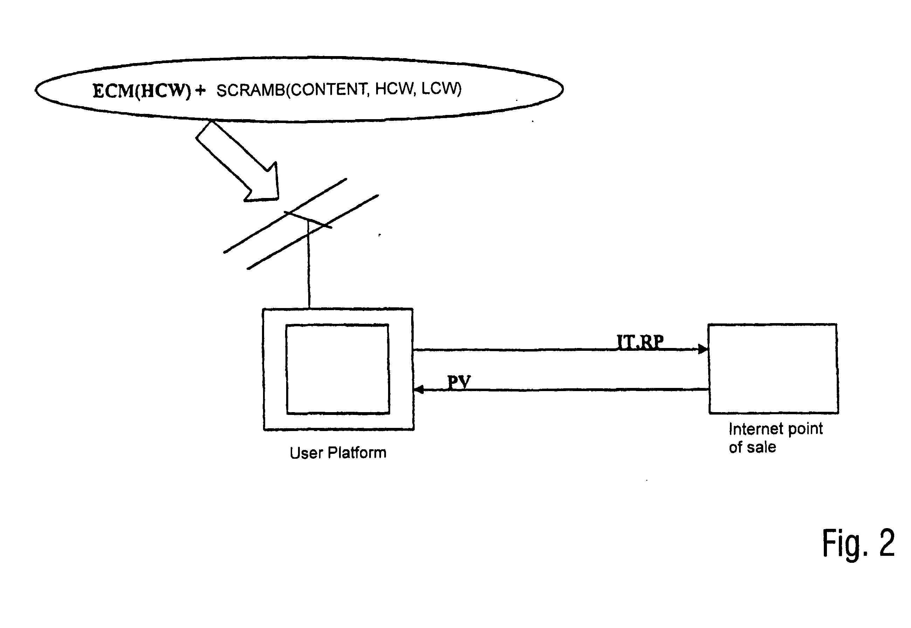

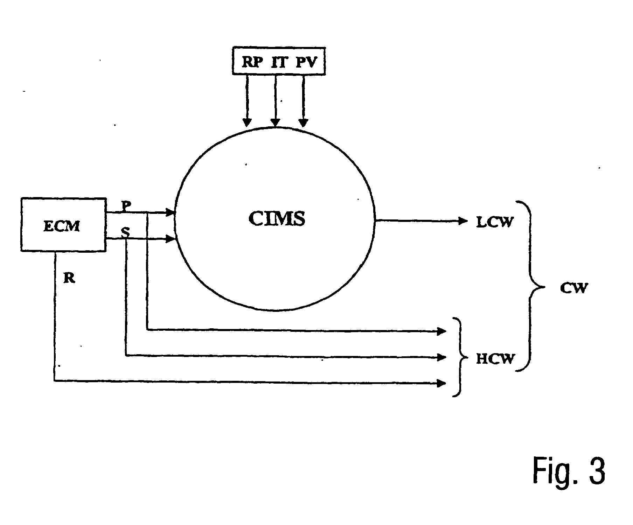

The system comprises a/an:
- Digital TV header able to scramble content based on CW codes and insert ECM service information in which only a part of the CW codes known as HCW will travel, as explained in the next section.
- Header code generating system for content access. This system will be capable of general all of the CW codes necessary to scramble payment content for a certain period of time T (typically, may be one month). Each CW will be divided into two subcode fields: HCW and LCW. HCW, in turn, will consist of what we call the seed S, a random field R, and a pointer P that is always associated with a unique subcode LCW. One characteristic of the LCW and the pointer P is that they remain constant throughout the content or set of contents associated with a single purchase option. A set of all possible LCWs will be generated automatically based on S and P by a function F. S will be a constant number throughout the entire period T, which is also constant, valid for the available payment products. The function F may also be changed, as an additional measure, for relatively long periods comparable to T, but entirely indefinitely. The mechanism for updating the F function of user platforms will be from the content broadcast channel. The generation process will store the different LCWs in a table that will be indexed with the field P contained in HCW, thereby connecting the two halves of the CW. See figure 1.
- Internet point of sale portal, which makes it possible to make payments in the usual manner by credit card. It will also have a mobile telephone message server to allow transactions through this medium. Transactions will be conducted using a secure protocol based on a public time code with a transaction identifier IT. The transaction identifier will be obtained from a random generator that will reside on the user platform, upon which the entire encryption mechanism will be based throughout the transaction. Once the sale has been made, an electronic receipt will be sent containing the privileges acquired, which we will call PV, with a signature and encoding that depends upon the IT for subsequent authentication and extraction, only on the user platform having that identifier. The PV message will enable the generation of the LCWs corresponding to the purchase within the list of possible semicodes. See figure 2.
- User platform responsible for performing interface functions with the users to conduct the transaction to purchase PV privileges in response to a request for RP privileges. The user platform will be capable of generating the LCW semicodes allowed based on S, P, IT, RP and PV. System security is essentially based on this point. Therefore, the platform responsible for this function will be a monolithic integrated circuit for security, which we will call CIMS, and which, on one hand, will conceal a private algorithm and, on the other, must be sufficiently complex that it cannot be emulated in real time by a standard processor. In this sense, it is important to note that the LCW semicode cannot be generated until the content acquired begins since this is when P is known. Therefore, the LCW must be obtained within a very brief period. This mechanism provides additional security for short-duration pay-per-view content, such as films and sports events. See figure 3.
- Auxiliary user platforms for sending RP. Except for generating the IT identifier, the user's content viewing platform is not the only medium for purchasing privileges since one may request that PV privileges be sent and subsequently receive them by mobile telephone, Internet access or normal telephone connection.

Following is a description of how the system functions:
1. From his platform, the user obtains an IT and makes an RP request for the content he wishes to acquire by making a selection from a menu on his television or Internet connection or in a message via his mobile telephone. Basically, the information to be provided will be a selection of content to be purchased, a credit card number and any other information to increase security (e.g., the code associated with the credit card). If the transaction is conducted entirely from the user platform by internal modem, another option can be to physically insert a bank credit card into the user platform, which already has the user's private information, thereby simplifying the process and increasing security.
2. Once the transaction has been successfully completed, a set of numeric messages constituting the PV, customized for the corresponding IT and RP, will be received via the same medium through which the purchase was made. If the purchase was made using the user's own platform, the procedure will be automatic and transparent via an internal modem. If the transaction was conducted via Internet or mobile telephone, it will be necessary to enter the PV message using a menu for that purpose that can be displayed on the television from the user platform.
3. The user platform will authenticate the PV privileges by means of the IT and the RP through a function we will call A within the CIMS circuit. From this moment, the system will wait for receipt of an ECM, whose field P combined with PV will generate and validate the corresponding LCW so that the corresponding content can be viewed.

### Explanation of Figures

To better understand the invention, figures are included that show the most relevant functional aspects.

Figure 1 shows the operator's header system in which scrambled content is multiplexed with the CW codes and the ECM that carry only the HCW subcode.

Figure 2 shows the flow of messages and information at the time that the transaction to purchase privileges is conducted.

Figure 3 is a diagram showing how the monolithic integrated circuit (CIMS) functions from the perspective of data input/output.

### Preferred Embodiments of the Invention

Operator headers are systems having a great amount of flexibility in managing content. This invention only requires incorporation of the CW generator following the procedure described above and coordinating it with the functions that the header itself has to generate service information to control programming, such as the beginning and end of pay content, content guides, etc.

The virtual point of sale on the Internet must also be produced according to the methodology customary in these cases, with the inclusion of the public code algorithm necessary to protect the PV, IT and RP messages. It shall be provided with the resources necessary to be able to support transactions automatically from the user platform or mobile telephone.

The user platform will be based on a standard MPEG2 digital television decoder that may or may not be built into the television itself. The Conditional Access System (CAS) may be built into the receiver or may reside in a common interface module (NRSS - EIA-679 Part B or CENELEC EN50221). In any case, it will be based on an Application Specific Integrated Circuit (ASIC) that will implement the CIMS processing described above. The user's CAS system will also incorporate access management software that will include the content programming management functions, point of sale access, secure transaction and interface and viewing with the user through menus displayed on the television.

### Glossary of Terms

- A:: Function of authenticating and obtaining valid pointers within the CIMS block of the user platform.
- ASIC:: Application Specific Integrated Circuit
- CAS:: Conditional Access System
- CIMS:: Monolithic Integrated Circuit for Security
- CW:: Control Word or content descrambling code
- ECM:: Entitlement Control Messages Service information inserted by the header that, in this case, support management and carries only one part of the CW known as HCW.
- EMM:: Entitlement Management Messages. Service information customized for each user for the purpose of validating content.
- F:: Function of generating LCW
- HCW:: Part of the CW inserted into the ECMs
- IT:: Transaction Identifier
- LCW:: Part of the CW generated at the user platform
- P:: A sub-field of HCW that points to one and only one LCW
- PV:: Message of privileges acquired
- R:: Random HCW sub-field
- RP:: Privilege Request Message
- S:: LCW generating seed that remains constant for an operator-programmed period "T"
- T:: Time that S parameter is maintained. A typical period may be 1 month.

## Claims

1. Conditional access systems for content broadcast on digital television networks that do not require subscriber management from the operator header.

2. Content acquisition, based on a purchase via an Internet point of sale or mobile telephone message server connected to said point of sale, via normal payment methods standard in e-commerce, such as a credit card, without the need for any commitment to the operator.

3. Procedure for acquiring privileges both automatically, based on a modem built into the user platform, and manually by mobile telephone messaging.

4. Broadcast channel bandwidth resources saved based on eliminating individual user validation and management messages (EMM) and reducing messages containing content descrambling codes (ECM).

5. Procedure to split the CW into two parts (HCW and LCW), which are tied to a pointer P that, moreover, implicitly entails an autosynchronization mechanism on the user platform by making the period that a P value exists match the content validity period.

6. Generation of the set of LCW semicodes based on an F function known in the header and in the CIMS of the user platform. As parameters, this function has the pointer P and a seed S constant during constant, general validation periods T, such as one month. As an additional security system, the function F may also change during relatively long yet indefinite periods and user CIMS may be updated via the broadcast channel.

7. Protection of sensitive processes on the user platform via an ASIC known as CIMS that, at least, houses the functions A and F of authentication and generation of LCW subcodes.
